# EUROPEAN PATENT SPECIFICATION

(11) **EP 1 077 099 B1**
(45) Date of publication and mention of the grant of the patent: **27.10.2004**
(21) Application number: 00117932.4
(22) Date of filing: 21.08.2000
(51) Int. Cl.: B22F 3/22, F16H 13/00

(54) **Method of producing metal sintered compacts**
Verfahren zur Herstellung von gesinterten Formkörpern aus Metallpulver durch Schlickergiessen und Gravieren
Procédé de préparation d'ébuaches métalliques frittées par coulage en barbotine et gravure

(30) Priority: 19.08.1999 JP 23269599
(43) Date of publication of application: 21.02.2001
(73) Proprietor: SEIKO EPSON CORPORATION, Shinjuku-ku, Tokyo 163-0811 (JP)
(72) Inventor: Shimodaira, Kenichi, c/o Injex Corporation, Suwa-shi, Nagano-ken, 392-0027 (JP); Hayashi, Junichi, c/o Injex Corporation, Suwa-shi, Nagano-ken, 392-0027 (JP)
(74) Representative: Hoffmann, Eckart, Dipl.-Ing.

(56) References cited:
- EP-A- 0 457 350
- EP-A- 0 856 265

## Description

### BACKGROUND OF THE INVENTION

The present invention relates to a method of producing metal sintered compacts.

Conventionally, metallic memorial plates are produced by casting methods such as a shell molding method in which a mold formed by backing thermosetting molding sand is used, and an investment casting method in which a wax model is used, and the like.

However, in these casting methods, casting flaws such as cracks and voids are liable to be formed in products finally obtained. When such flaws are formed in a product, contacting area with air becomes large, thus leading to oxidization or rust of the product. Further, in the casting methods, a releasability of a product from a mold must be considered. In this connection, in order to obtain a good releasability, it is necessary for the mold to have tapered portions for release of the product or rounded corner portions having a relatively large curvature, but this in turn restricts variation in the shape of the mold. Further, the casting methods involve a problem in that fine and precise letters and patterns are difficult to form on products, and thus formed letters and patterns are likely to be changed or deformed within a few years.

Further, since memorial plates obtained by the casting method have rough casting surfaces, finishing such as sand blasting has to be performed on the obtained memorial plates.

Moreover, in these casting methods, there is a case that it is impossible or difficult to produce a metal product by using materials such as metals having high melting point, hard metals that metal products formed therefrom are difficult to process, and metals which are difficult to form alloys. Further, even if a metal product can be formed from these materials, longer time and difficult processing are required. That is to say, the conventional casting methods involve limitation on metal materials to be used.

EP-A-0 856 265 discloses a method for the manufacture of a precious metal product, that consists essentially of a first step of forming in a desired shape a clayish composition consisting of 90 - 99 wt% of at least one member selected from among pure precious metal powders and precious metal alloy powders, 0.1 - 10 wt% of an organic binder and water, a second step of solidifying the formed clayish composition by drying to obtain a solid formed mass, a third step of attaching an accessory member fast to said solid formed mass with a portion of said clayish composition serving as an adhesive agent, and a fourth step of firing the resultant composite having said accessory member fastened to said solid formed mass.

EP-A-0 457 350 discloses a method for manufacturing a precious metal article comprising preparing a moldable mixture containing a precious metal powder and a binder which is removable by sintering, shaping the moldable mixture into a prescribed molded object, and subjecting the molded object to solid-phase sintering operation to provide the precious metal article free of the binder. The shaping comprises applying the moldable mixture by hand onto a combustible base member to obtain a molded object reflecting the shape of the base member. In one embodiment the moldable mixture is placed and extended on a worktable to produce a plate which is then carved or punched into a desired shape before being sintered.

### SUMMARY OF THE INVENTION

It is therefore an object of the present invention to provide a method of producing metal sintered compacts which is capable of producing metal sintered compacts having high density, and on which metal working such as carving can be carried out easily and in which various metal materials can be used for producing the sintered compacts.

This object is achieved by a method as claimed in claim 1. Preferred embodiments of the invention are subject-matter of the dependent claims.

According to the present invention described above, it is possible to produce high density metal sintered compacts on which fine and precise patterns and/or letters and the like can be formed and indicated, or which have a precise complicated shape. Further, it is also possible to produce metal products such as large size metal products and custom-made metal products and the like, since in the present invention such metal products are produced by the slip casting. Moreover, according to the method described above, it is possible to choose metal material for the metal powder appropriately. This makes it possible to manufacture metal products such as memorial plates from metal alloys that could not be used in the conventional casting methods and from hard metal materials that metal products formed therefrom are difficult to process or metal materials having high melting point, so that the method of the present invention can expand use of metal sintered compacts. The metal sintered compact having a porosity less of than 7% has a high density and high strength. Therefore, it is possible to provide metal sintered compacts having high dimensional precision as well as good appearance. Further, in such metal sintered compacts, sintering flaws are not likely to occur by the sintering process.

In the present invention described above, it is preferred that the fluid mixture includes two or more kinds of metal powders which have different compositions. By appropriately selecting two or more kinds of the metal powders, it becomes possible to produce metal sintered compacts having multiple functions or novel functions.

Further, in the method described above, it is preferred that the mean particle size of the metal powder is less than 150 µm. By using the metal powder having such mean particle size, densification of green bodies is promoted by sintering, so that it becomes possible to obtain sintered compacts having high density.

Moreover, in the method described above, it is also preferred that the content of the metal powder in the fluid mixture is 70 to 97wt%. The fluid mixture containing the metal powder of this range has sufficient fluidity so that it can be smoothly poured into a mold. Further, use of such fluid mixture also makes it possible to prevent a green body from experiencing greater shrinkage during sintering.

Moreover, in the method described above, it is also preferred that the fluid mixture further includes an organic binder and the content of the organic binder in the fluid mixture is 0.2 to 5wt%. By using such fluid mixture, sufficient bonding strength between metal powder particles can be ensured after the water component in the slurry is removed without lowering the fluidity of the slurry, so that occurrence of sintering flaws in the metal sintered compact and increase of porosity of the metal sintered compact can be prevented appropriately.

In this case, it is preferred that the organic binder is mainly composed of water-soluble substances. By using such an organic binder, the organic binder is well dispersed in the water component in a slurry, and therefore it is possible to obtain a slurry having uniform compositions.

Further, in the method described above, it is preferred that the fluid mixture further includes a plasticizer. This makes it possible to improve the fluidity of the fluid mixture, thereby enabling to obtain the green body having more uniformly dispersed particles through the slip casting process.

Furthermore, in the method described above, it is preferred that the green body is taken out from the mold in the step of producing the green body by the slip casting at the time when the content of the water in the green body becomes 8% or less. This makes it possible to take out the green body from the mold smoothly without deforming and breaking the green body.

In the method described above, predetermined patterns, shapes and/or letters and the like are formed on the green body by the carving, so that it is possible to produce metal sintered compacts on which desired fine and precise patterns and/or letters and the like are formed.

Further, in the present invention, it is preferred that the sintering step involves debinding treatment for removing the organic binder from the green body. Namely, in the present invention, it is not necessary to separately set a debinding step, and this makes it possible to simplify the manufacturing process for metal sintered compacts and to improve productivity.

Further, according to the present invention described above, it is possible to produce metal sintered compacts on which fine and precise patterns and/or letters and the like are formed or which have precise complicated shapes, so that the present invention is suitable for manufacturing custom-made metal products.

In this regard, the present invention is particularly suitable for manufacturing memorial plates. This is because memorial plates are usually used in the outside, and in such a case they are exposed in the air for a long time. For this reason, materials that have excellent corrosion resistance and weatherability are used as constituent materials for the memorial plates. In the present invention, it is possible to produce metal sintered compacts having high density and no sintering flaws by appropriately selecting kinds of metal powders to be used and therefore the present invention is particularly suitable for manufacturing memorial plates having such characteristics.

Further, in the present invention, it is not necessary to form reversed letters (i.e., letters in a mirrored manner) on the bottom of the mold as was done in the conventional methods. Namely, in the present invention, it is possible to directly perform the carving on the green body to form letters thereon without reversing them as described above. As a result, it becomes possible to improve workability when producing metal products.

The above described and other objects, methods and advantages of the present invention will be apparent more clearly when the following detailed description of the preferred embodiments is considered taken in conjunction with the accompanying drawings.

### BRIEF DESCRIPTION OF THE DRAWINGS

- Fig. 1: is a step diagram which shows an embodiment of a method for producing metal sintered compacts according to the present invention.
- Fig. 2: is an illustration which shows a sectional view of an example of a mold used in the slip casting process in the present invention.

### DETAILED DESCRIPTION OF THE PREFERRED EMBODIMENTS

Hereinafter, a method for producing metal sintered compacts according to the present invention will be described in detail.

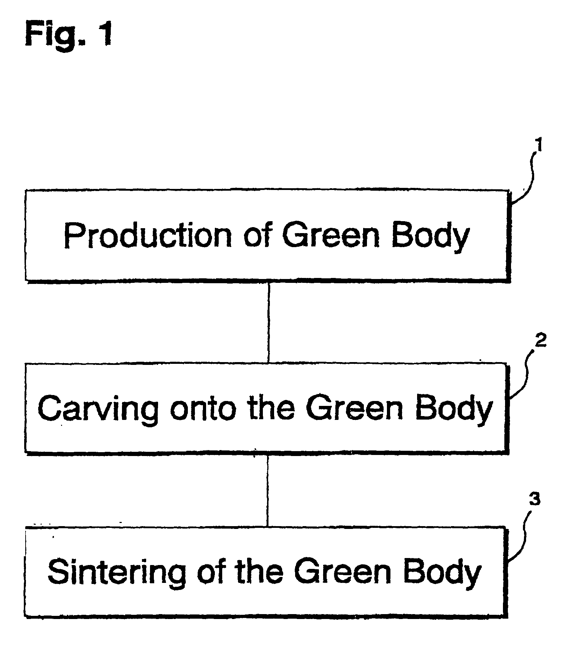

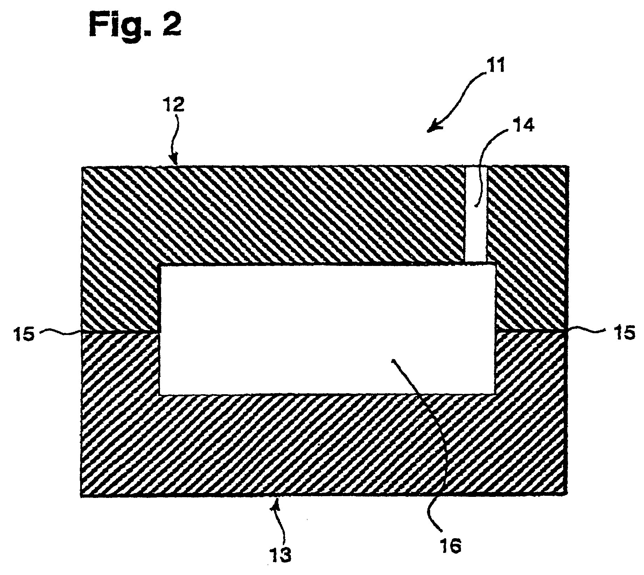

Fig. 1 is a step diagram which shows an embodiment of a method for producing metal sintered compacts according to the present invention; and Fig. 2 is an illustration which shows a sectional view of an example of a mold used in the slip casting process in the present invention.

First, a first embodiment of the method for producing metal sintered compacts will be described. In this connection, the description is given with reference to the case where a metal sintered compact is produced as a memorial plate.

### [1] Production of Green body

In the present invention, a green body is produced by slip casting using fluid mixture containing metal powder and a mold for receiving the fluid mixture. Hereinafter, the fluid mixture is simply referred to as "slurry".

The slurry contains metal powder, an organic binder (dispersing medium) and water. Usually, the slurry containing these components is stirred by a stirrer (i.e., mixing machine) so that the metal powder is substantially uniformly dispersed in the slurry.

No limitation is imposed upon metal materials for the metal powder (hereinbelow, referred to simply as "metal material"). For example, at least one of Fe, Ni, Co, Cr, Mn, Zn, Pt, Au, Ag, Cu, Pd, Al, W, Ti, V, Mo, Nb, Zr and the like; or alloys which mainly contain at least one of these elements may be used as constituent materials for the metal powder.

As described above, various metal materials can be used for the metal powder for the method of the present invention. Further, as described hereinbelow, the present invention can be applied to molds having various shapes. For these reasons, in the present invention, metal materials which were difficult to use in the conventional methods can be used to form metal products (metal objects) such as memorial plates. For example, in the present invention, in order to produce metal products, it is possible to use metal materials such as metals having relatively high hardness; metals which are difficult to process; metals having high melting point; and metals which are difficult to form alloys.

A memorial plate is usually used in the outside, and in such a case it is exposed in the air for a long time. For this reason, materials that have excellent corrosion resistance and weatherability should preferably be used as constituent materials for the metal powder constituting a memorial plate.

Specific examples of such metal materials include Fe-based alloys having corrosion resistance such as stainless steels (e.g., SUS 304, SUS 310S, SUS 316L, SUS 317, SUS 329J1, SUS 410, SUS 430, SUS 440 and SUS 630) and the like; Ti or Ti-based alloys; Ni or Ni-based alloys; and the like.

Further, in the present invention, two or more kinds of metal materials which have different compositions may be used. Using such metal materials makes it possible to produce metal products made from alloys having compositions that could not be used in the conventional casting methods. Further, this also makes it possible to produce metal sintered compacts having multiple functions and novel functions easily, whereby use of metal sintered compacts is expanded.

No limitation is imposed upon the mean particle size of the metal powder to be used in the present invention, but it should be smaller than 150 µm, preferably about 0.5 to 80 µm, and more preferably about 1 to 60 µm. When the mean particle size of the metal powder is too large, the sintered compact does not become dense quickly, and this makes it difficult to obtain a metal sintered compact having high density. On the other hand, when the mean particle size of the metal powder is too small, the total surface area of the metal powder becomes large, and this increases the amount of the organic binder to be added in the slurry. Such increased amount of the binder results in large shrinkage during the sintering of the green body.

The content of the metal powder in the slurry is preferably about 70 to 97 wt%, and more preferably about 80 to 95 wt%. When the content of the metal powder is lower than 70 wt%, the green body experiences greater shrinkage when it is sintered, and therefore dimensional precision is lowered. On the other hand, when the content of the metal powder exceeds 97 wt%, the relative content of the organic binder and water becomes too small, resulting in poor fluidity when the slurry is poured into the mold. This makes the production of the green body difficult or impossible, or the composition of the green body inhomogeneous.

No limitation is imposed upon the method for producing the metal powder. For example, a water atomization method, a gas atomization method, a reduction method, a carbonyl method, or a grinding method may be used to obtain the metal powder. Among these methods, the atomization method is preferably employed in this invention.

The organic binder used in the present invention functions as a binder for binding particles of the metal powder. Further, in the slurry, the organic binder also functions as a dispersing medium for uniformly dispersing the metal powder in the slurry.

Examples of such an organic binder (which functions as both a dispersing medium and a binder) include organic substances such as starch, agar and the like; and water-soluble resins such as polyvinyl alcohol (PVA), polyvinyl pyrrolidone (PVP), water-soluble nylon and the like. These organic binders can be used alone or in combination of two or more.

The content of such an organic binder in the slurry is preferably about 0.2 to 5wt%, more preferably about 0.2 to 3wt%. When the content of the organic binder is less than 0.2wt%, the bonding strength between the metal powder particles contained in the green body becomes weaker after removing water component, and this results in a fragile green body. On the other hand, when the content of the organic binder is larger than 5wt%, the fluidity of the slurry becomes lowered so that flaws are liable to occur in the green body. Further, the porosity of the metal sintered compact after debinding and sintering tends to increase.

Further, in the present invention, plasticizers may also be added in the slurry. Examples of such plasticizers include phthalic acid esters (e.g., DOP, DEP and DBP), adipic acid esters, trimellitic acid esters, sebacic acid esters and the like. These may be used singly or in combinations of two or more.

In addition to the metal powder, organic binder and plasticizers, various additives such as antioxidants, debinding promoters, surface active agents and the like may be added in the slurry, if required. In this regard, it is to be noted that normally the remaining part of the slurry include water component.

Conditions for stirring the slurry will vary depending on compositions and particle size of the metal powder to be used, and types and amounts of binder and additives to be added. One example of the conditions is a stirring temperature of 5 to 80°C and a stirring time of about 5 to 90 minutes.

Next, the slurry obtained in the manner described above is poured into the mold, and then the green body having a desired shape and size is produced by the slip casting.

As shown in Fig. 2, the mold 11 is composed of an upper mold part 12 and a lower mold part 13. The upper mold part 12 and the lower mold part 13 are joined through a joint surface 15. In the mold 11, a cavity (molding space) 16 which corresponds to a shape of a memorial plate to be produced is defined. Further, in the upper mold part 12 of the mold 11, a passage 14 through which the slurry is poured into the cavity 16 is formed.

In this embodiment, the cavity 16 defined in the mold 11 has a plate-like shape (which corresponds to a shape of a memorial plate to be produced).

In this connection, a porous material such as gypsum is preferably be used for the material for the mold 11 having such a cavity 16. Using such material enables water component in the slurry to be absorbed by the mold so that the green body is produced.

Next, a method of producing a green body using the mold 11 mentioned above will be described.

First, a slurry is poured into the mold 11 through the passage 14 so that the cavity 16 is filled with the slurry. After the completion of pouring the slurry, the mold 11 is being left until most of the water component in the slurry is absorbed by the mold 11. Next, the mold 11 is separated into the upper mold part 12 and the lower mold part 13, and then the plate-like green body is taken out from the cavity 16.

In this connection, preferably, the green body is taken out from the mold 11 when the content of the water in the green body becomes less than 8%, and more preferably less than 5%. In the case where the green body is taken out from the mold 11 when the content of the water in the green body is larger than 8%, handling of the obtained green body becomes difficult, and deformation, flaws, breaking and the like are liable to occur in the obtained green body, which usually make it difficult or impossible to perform metal carving on the obtained green body (which will be described below).

In this connection, the cavity 16 may be formed into any shape so that a green body having a desired shape can be obtained. Further, in comparison with the metal injection molding (MIM) which uses a metallic injection die, the slip casting which uses a mold made from gypsum or the like is capable of producing a large size mold easily at a low cost. This means that the slip casting is suitable for manufacturing metal products such as custom-made metal products, and metal products having relatively large size, and the like.

Further, according to the slip casting, it is possible to reduce the amount of the binder to be removed from the green body during the debinding treatment as compared with the metal injection molding (MIM). This means that according to the present invention, a metal product can be produced using smaller amount of the binder.

In this invention, it is to be noted that the shape and dimensions of the green body formed from the mold are decided taking into account the estimated shrinkage that the green body will experience during subsequent sintering process.

### [2] Carving onto Green Body

Predetermined carving is performed on the plate-like green body obtained in the above step [1]. In this connection, such carving is performed by forming (engraving) predetermined patterns, shapes, letters and/or the like on the green body.

When performing the carving on the green body, a carving tool such as an end milling which is driven by a carving machine with a motor, a chisel which does not need to be driven, and the like may be used.

In this embodiment, predetermined complicated fine letters and patterns are sharply and precisely carved on the green body with the end milling in order to produce the memorial plate formed with the letters and patterns.

In this connection, if required, additional metal working such as trimming, deburring and the like may be performed on the green body on which the carving has been performed.

Degree of the carving to be performed on the green body should be decided taking into account the estimated shrinkage that the green body will experience during the subsequent debinding and sintering processes.

The hardness of the green body before sintering is low as compared with the sintered compact. Therefore, such carving can be easily performed on the green body regardless of the composition of the metal powder contained in the green body. For this reason, even if a metal product is produced using materials such as metals having high melting point or hard metals or the like which were difficult to process by the conventional methods, it is possible to perform the carving. As described above, since in this invention the carving can be performed on the green body, it is possible to easily control the size and shape of the product finally obtained. This means that the method of this invention is suitable for producing metal products (metal objects) formed with fine complicated patterns, letters and/or the like has been formed and/or having a precise complicated shape.

Further, in the conventional casting methods, in order to produce a memorial plate having letters thereon, it is necessary to form reversed letters (i.e., letters in a mirrored manner) on the bottom of the mold die. In contrast with this, in the present invention, it is possible to directly perform the carving on the green body to form letters thereon without reversing them as described above. As a result, it becomes possible to improve workability when producing metal products.

### [3] Sintering of Green Body

The green body prepared in the above-mentioned manner is then sintered in a sintering furnace to produce a metal sintered compact. In this connection, it is to be noted that the sintering involves debinding treatment for removing the organic binder from the green body.

Diffusion and grain growth of the metal powder are promoted by such sintering, and thus crystal grains are created. During the sintering, the pores disappear to form a metal sintered compact which is dense overall, that is, a metal sintered compact having high density and low porosity.

In the case where the metal composition is, for example, Fe or Fe-based alloy, the sintering temperature during the sintering process is preferably about 1000 to 1500°C, and more preferably about 1050 to 1450°C. Further, in the case where the metal composition is Ti or a Ti-based alloy, the sintering temperature is preferably about 950 to 1500°C, and more preferably about 1000 to 1450°C. Furthermore, in the case where the metal composition is Ni or Ni-based alloy, the sintering temperature is preferably about 950 to 1500°C, and more preferably about 1000 to 1450°C.

In this connection, it is to be noted that the sintering temperature may be changed (risen or lowered) with elapse of time within or outside of the range mentioned in the above, if desired.

In the case where the sintering temperatures given in the above are employed, sintering time is preferably about 0.5 to 8 hours and more preferably about 1 to 5 hours.

No limitations are imposed on the sintering atmosphere, but in a preferred practice, the sintering should be performed in a non-oxidizing atmosphere, under a vacuum state, or under reduced pressure state. Such atmosphere prevents properties of the metal sintered compact from being deteriorated through the oxidation of the metal, and further it contributes to reduced porosity in the metal sintered compact.

Further, the preferred sintering atmosphere (pressure) is one under vacuum or a reduced pressure of 133 Pa (1 torr) or lower (more preferably 133 x 10⁻² to 133 x 10⁻⁸ Pa (1 x 10⁻² to 1 x 10⁻⁸ torr)); in an inert gas (such as nitrogen gas, argon gas and the like) at 1 to 101080 Pa (133 to 760 torr); or in a hydrogen gas at 1 to 101080 Pa (133 to 760 torr).

In this invention, the sintering atmosphere may be changed during the sintering process. For example, the sintering atmosphere, which has been initially set to a reduced pressure of 133 x 10⁻² to 133 x 10⁻⁶ Pa (1 x 10⁻² to 1 x 10⁻⁶ torr), may be changed into an inert gas atmosphere mentioned above during the sintering process.

By sintering the green body under the conditions described above, it becomes possible to reduce porosity of the metal sintered compact finally obtained. In this connection, the porosity of the metal sintered compact is less than 7%, and preferably 5%. The metal sintered compact having the porosity of this range has high density, high strength and high dimensional precision, so that not only sintering flaws can be prevented but also good appearance can be obtained. Further, sintering can be carried out efficiently to complete the sintering in a short time, thereby improving productivity.

Alternatively, sintering may be carried out in two or more stages. For example, the sintering process may be completed by dividing it into a first sintering stage and a second sintering stage.

In this case, the second sintering stage may be conducted under sintering conditions different from those for the first sintering state. Further, the sintering temperature for the second sintering stage may be set to higher temperature than that for the first sintering stage. In this way, it becomes possible to further improve sintering efficiency and to further reduce porosity of the metal sintered compact finally obtained.

It should be noted that metal products which can be obtained by the method according to the present invention is not limited to the custom-made memorial plate mentioned above. For example, the present invention can be applied to production of products (objects) such as bronze statues, busts, seals, nameplates, number plates, reliefs (e.g., art objects, industrial art objects), and the like.

Further, it should be noted that the shape and dimensions of the metal sintered compact are decided taking into account the estimated shrinkage that the green body will experience during the debinding and sintering processes.

Depending on a particular objective, the present invention may include a preliminary step coming before the step [1], an intermediate step coming between the steps [1] and [3], or a post step coming after the step [3].

### EXAMPLES

Hereinafter, specific examples of the present invention will be described.

### < Example 1 >

In this Example, a memorial plate (metal sintered compact) was produced in accordance with the following manner.

As for metal powder, a stainless steel (SUS 316L / composition: Fe-18wt%Cr-12wt%Ni-2wt%Mo alloy) powder of 12 µm mean particle size was prepared in accordance with the water atomization method.

An organic binder including polyvinyl alcohol and dibutyl phthalate (plasticizer) and water were mixed with the prepared metal powder. The mixture containing these components were stirred with a stirrer under the conditions of 15°C x 30 minutes to obtain slurry.

The details of the components in the slurry obtained in Example 1 are summarized in the following Table 1.

**Table 1**

| | Components in Slurry | [wt%] |
|---|---|---|
| Metal Material | Stainless steel Powder | 81 |
| Organic Binder | Polyvinyl alcohol (PVA) | 1 |
| Organic Binder (Plasticizer) | Dibutyl phthalate (DBP) | 0.2 |
| Dispersing Medium | Water | Bal. |

Next, the obtained slurry was poured into the mold for the slip casting. Then, the mold filled with the slurry was being left for a predetermined time period under the condition of normal pressure and temperature until most of the water component in the slurry was absorbed by the mold. Thereafter, the mold was divided into the upper mold part and the lower mold part to take out a green body from the mold. At this time, the content of the water in the obtained green body was 4%. Further, the green body had the height of 345mm, the length of 345mm and the width of 41mm. In this case, the target height, length and width after the sintering process were 250mm, 250mm and 30mm, respectively.

Next, carving was performed on the obtained green body. In this carving, predetermined letters and patterns were carved on the green body with an end milling as a carving tool.

Then, the green body was subjected to the sintering treatment that involves debinding treatment (i.e., binder removing treatment) to obtain a metal sintered compact (memorial plate). The sintering was initially carried out under the conditions of the pressure of 1330 Pa (10 torr) at a temperature of 500°C for three hours in a nitrogen gas atmosphere to complete the debinding treatment. Then, the temperature was raised to sinter the brown body (binder-removed green body). This sintering was carried out under the conditions of 1350°C x 3 hours in an Ar gas atmosphere.

### <Example 2>

In this Example, a memorial plate (metal sintered compact) was produced using two kinds of metal powders in accordance with the following manner.

As for the metal powders, a nickel powder having 3 µm mean particle size and an iron powder (pure iron) having 3 µm mean particle size were prepared in accordance with the carbonyl method. Further, a cobalt powder having 2 µm mean particle size was prepared in accordance with the electrolytic decomposition process.

An organic binder including polyvinyl pyrrolidone and dibutyl phthalate (plasticizer) and water were mixed with the prepared nickel powder, iron powder and cobalt powder. The mixture containing these components were stirred with the stirrer under the conditions of 20°C x 1 hour to obtain slurry.

The details of the components in the slurry obtained in Example 2 are summarized in the following Table 2.

**Table 2**

| | Components in Slurry | [wt%] |
|---|---|---|
| Metal Material | Ni powder | 80 |
| Metal Material | Co powder | 2 |
| Metal Material | Iron powder | 2 |
| Organic Binder | Polyvinyl pyrrolidone (PVP) | 2 |
| Organic Binder (Plasticizer) | Dibutyl phthalate (DBP) | 0.4 |
| Dispersing Medium | Water | Bal. |

Next, the obtained slurry was poured into the mold for the slip casting. Then, the mold filled with the slurry was being left for a predetermined time period under the condition of normal pressure and temperature until the water component in the slurry was absorbed by the mold. Thereafter, the mold was divided into the upper mold part and the lower mold part to take out a green body from the mold. The content of the water in the obtained green body was 3%. Further, the obtained green body had the height of 350mm, the length of 350mm and the width of 42mm. In this case, the target height, length and width after the sintering process were 250mm, 250mm and 30mm, respectively.

Next, carving was performed on the obtained green body. In this carving, predetermined letters and patterns were carved on the green body with the end milling.

Next, the green body was subjected to the sintering treatment that involves debinding treatment to obtain a metal sintered compact (custom-made memorial plate). The sintering was initially carried out under the conditions of the pressure of 133 x 10⁻² Pa (1 x 10⁻² torr) at a temperature of 450°C for three hours to complete the debinding treatment. Then, the temperature was raised to sinter the brown body (binder-removed green body). This sintering treatment was carried out under the conditions of 1380°C x 3 hours in a hydrogen gas atmosphere.

### <QUALITY EVALUATION>

The metal sintered compacts obtained in each of Examples 1 and 2 were cut along different cutting planes to observe visually the cutting planes thereof. The visual observation was carried out to check whether or not sintering flaws were formed in the respective metal sintered compacts.

In addition, the metal sintered compacts obtained in each of Examples 1 and 2 were also visually observed to check the condition of the letters and patterns formed on the respective sintered compacts.

The results of the observations are summarized in Table 3.

**Table 3**

| Example | Sintering flaws In Sintered compact | Appearance of Letters and Patterns |
|---|---|---|
| EX.1 (Stainless steel) | None | Good |
| EX.2 (Ni, Co, Iron) | None | Good |

As indicated in Table 3, no sintering flaws were found on the cutting planes of the metal sintered compacts of Examples 1 and 2. Namely, through the observations, it was found that the metal sintered compact obtained in each of Examples 1 and 2 had good quality. Further, through the observation, it has been confirmed that the letters and patterns that appeared on the sintered compact of each Example were precise and clear so that those which had been formed on the green body were maintained without deterioration.

According to the present invention described above, it is possible to produce metal sintered compacts (metal products / metal objects) which have high density and a precise complicated shape and on which desired fine precise letters and patterns and the like are formed.

Further, according to the present invention, it is possible to produce metal products at a low cost by the slip casting. In particular, it is possible to produce easily metal products such as relatively large size metal products and custom-made metal products.

Furthermore, according to the present invention, it is possible to manufacture metal products such as memorial plates from metal materials such as hard metals or metals having high melting point that could not be used in the conventional methods, so that the method of the present invention can expand use of metal sintered compacts.

Furthermore, when two or more kinds of metal powders are used in the present invention, it becomes possible to produce metal sintered compacts having multiple functions and novel functions.

Furthermore, when the present invention is applied to the production of custom-made metal products such as bronze statues, busts, seals, nameplates, number plates, reliefs (e.g., art objects, industrial art objects) and the like, the effects described above are more advantageously achieved.

Finally, it is to be understood that many changes and additions may be made to the embodiments described above without departing from the scope of the invention as defined in the appended Claims.

## Claims

1. A method of producing a metal sintered compact, comprising the steps of:
preparing a fluid mixture including at least one kind of metal powder;
producing a green body using the fluid mixture by slip casting;
performing carving on the produced green body; and
sintering the green body on which the carving has been performed to obtain a metal sintered compact such that the porosity of the metal sintered compact finally obtained is less than 7%.

2. The method as claimed in Claim 1, wherein the fluid mixture includes two or more kinds of metal powders which have different compositions.

3. The method as claimed in Claim 1, wherein the mean particle size of the metal powder is less than 150 µm.

4. The method as claimed in Claim 1, wherein the content of the metal powder in the fluid mixture is 70 to 97wt%.

5. The method as claimed in Claim 1, wherein the fluid mixture further includes an organic binder, wherein the content of the organic binder in the fluid mixture is 0.2 to 5wt%.

6. The method as claimed in Claim 5, wherein the organic binder is mainly composed of water-soluble substances.

7. The method as claimed in Claim 1, wherein the fluid mixture further includes a plasticizer.

8. The method as claimed in Claim 1, wherein in the step of producing the green body by the slip casting, the fluid mixture is poured into a mold, and then the green body is taken out from the mold when the content of the water in the green body becomes 8% or less.

9. The method as claimed in Claim 1, wherein the carving is performed by forming predetermined patterns, shapes, letters and/or the like on the green body.

10. The method as claimed in Claim 1, wherein the sintering step involves debinding treatment for removing the organic binder from the green body.

11. The method as claimed in Claim 1, wherein the metal sintered compact is produced as a custom-made product.

12. The method as claimed in Claim 11, wherein the custom-made metal sintered compact is a custom-made memorial plate.

## Patentansprüche

1. Verfahren zur Herstellung eines gesinterten Metallpresslings, umfassend die folgenden Stufen:
Herstellen eines Fluidgemisches, das mindestens eine Art eines Metallpulvers enthält;
Herstellen eines Grünkörpers unter Verwendung des Fluidgemisches durch Schlickergießen;
Durchführen eines Graviervorgangs am gebildeten Grünkörper; und
Sintern des Grünkörpers, an dem der Graviervorgang vorgenommen worden ist, unter Bildung eines gesinterten Metallpresslings, wobei die Porosität des schließlich erhaltenen gesinterten Metallpresslings weniger als 7 % beträgt.

2. Verfahren nach Anspruch 1, wobei das Fluidgemisch zwei oder mehr Arten von Metallpulvern, die unterschiedliche Zusammensetzungen aufweisen, umfasst.

3. Verfahren nach Anspruch 1, wobei die durchschnittliche Teilchengröße des Metallpulvers weniger als 150 µm beträgt.

4. Verfahren nach Anspruch 1, wobei der Anteil des Metallpulvers im Fluidgemisch 70 bis 97 Gew.-% beträgt.

5. Verfahren nach Anspruch 1, wobei das Fluidgemisch ferner ein organisches Bindemittel enthält, wobei der Anteil des organischen Bindemittels im Fluidgemisch 0,2 bis 5 Gew.-% beträgt.

6. Verfahren nach Anspruch 5, wobei das organische Bindemittel vorwiegend aus wasserlöslichen Substanzen zusammengesetzt ist.

7. Verfahren nach Anspruch 1, wobei das Fluidgemisch ferner einen Weichmacher umfasst.

8. Verfahren nach Anspruch 1, wobei bei der Stufe der Herstellung des Grünkörpers durch Schlickergießen das Fluidgemisch in eine Form gegossen wird und anschließend der Grünkörper aus der Form entnommen wird, wenn der Wassergehalt im Grünkörper 8 % oder weniger erreicht hat.

9. Verfahren nach Anspruch 1, wobei das Gravieren durch Ausbilden von vorbestimmten Mustern, Gestalten, Schriftzeichen und/oder dergl. am Grünkörper vorgenommen wird.

10. Verfahren nach Anspruch 1, wobei die Sinterungsstufe eine Entbindungsbehandlung zur Entfernung des organischen Bindemittels aus dem Grünkörper umfasst.

11. Verfahren nach Anspruch 1, wobei der gesinterte Metallpressling als maßgefertigtes Produkt hergestellt wird.

12. Verfahren nach Anspruch 11, wobei es sich beim maßgefertigten gesinterten Metallpressling um eine maßgefertigte Gedenktafel handelt.

## Revendications

1. Procédé de production d'un comprimé métallique fritté comprenant les étapes qui consistent :
à préparer un mélange fluide comprenant au moins une sorte de poudre métallique ;
à produire un corps à vert en utilisant le mélange fluide par coulée en barbotine ;
à effectuer une gravure sur le corps à vert produit ; et
à fritter le corps à vert sur lequel la gravure a été effectuée pour obtenir un comprimé métallique fritté tel que la porosité du comprimé métallique frittée obtenu finalement est inférieure à 7 %.

2. Procédé suivant la revendication 1, dans lequel le mélange fluide comprend deux ou plusieurs sortes de poudres métalliques de compositions différentes.

3. Procédé suivant la revendication 1, dans lequel la dimension moyenne de particule de la poudre métallique est inférieure à 150 µm.

4. Procédé suivant la revendication 1, dans lequel la teneur en la poudre métallique du mélange fluide est comprise entre 70 et 97 % en poids.

5. Procédé suivant la revendication 1, dans lequel le mélange fluide comprend, en outre, un liant organique, la teneur en le liant organique du mélange fluide étant comprise entre 0,2 et 5 % en poids.

6. Procédé suivant la revendication 5, dans lequel le liant organique est composé principalement de substances solubles dans l'eau.

7. Procédé suivant la revendication 1, dans lequel le mélange fluide contient, en outre, un plastifiant.

8. Procédé suivant la revendication 1, dans lequel, dans le stade de production du corps à vert par la coulée en barbotine, on verse le mélange fluide dans un moule, puis on démoule le corps à vert lorsque la teneur en eau du corps à vert devient inférieure ou égale à 8 %.

9. Procédé suivant la revendication 1, dans lequel on effectue la gravure en formant des motifs, des formes, des lettres ou analogues déterminés à l'avance sur le corps à vert.

10. Procédé suivant la revendication 1, dans lequel le stade de frittage implique un traitement de déliaison pour éliminer le liant organique du corps à vert.

11. Procédé suivant la revendication 1, dans lequel le comprimé métallique fritté est produit en tant que produit fait sur devis.

12. Procédé suivant la revendication 1, dans lequel le comprimé métallique fritté fait sur devis est une plaque de commémoration.
